**Europäisches Patentamt**

**European Patent Office**

**Office européen des brevets**

(19)

(11) Veröffentlichungsnummer: **0 287 803 B1**

# EUROPÄISCHE PATENTSCHRIFT

(12)

(45) Veröffentlichungstag der Patentschrift:
24.04.91 Patentblatt 91/17

(51) Int. Cl.⁵: **B60B 7/06**

(21) Anmeldenummer: **88103976.2**

(22) Anmeldetag: **14.03.88**

(54) Radzierblende für eine KfZ-Radfelge.

(30) Priorität: **22.04.87 DE 8705840 U**
**28.09.87 DE 3732587**

(43) Veröffentlichungstag der Anmeldung:
**26.10.88 Patentblatt 88/43**

(45) Bekanntmachung des Hinweises auf die
Patenterteilung:
**24.04.91 Patentblatt 91/17**

(84) Benannte Vertragsstaaten:
**AT BE CH DE ES FR GB GR IT LI LU NL SE**

(56) Entgegenhaltungen:
**EP-A- 0 187 228**
**GB-A- 2 061 838**
**US-A- 4 596 425**

(73) Patentinhaber: **Leichtmetall-Auto-Zubehör
Walter H.S. Albrecht GmbH & Co. KG
Kochstrasse 56
W-4150 Krefeld (DE)**

(72) Erfinder: **Leimkühler, Dieter
Heckschenstrasse 67
W-4150 Krefeld-Oppum (DE)**

(74) Vertreter: **Stark, Walter, Dr.-Ing.
Moerser Strasse 140
W-4150 Krefeld (DE)**

**Beschreibung**

Die Erfindung betrifft eine Radzierblende für eine KFZ-Radfelge mit umlaufender Innenschulter, bestehend aus einer kreisförmigen Abdeckscheibe, die innenseitig über den Umfang verteilt mehrere Vorsprünge mit schachtartigen Ausnehmungen aufweist, aus in den Ausnehmungen gehaltenen Klemmelementen, die sich mit einem außerhalb der Ausnehmung befindlichen Abschnitt an der Innenschulter der Radfelge abstützen, und aus einem metallischen Stützring, der an den Vorsprüngen gehalten ist und die Klemmelemente gegen die Innenschulter spannt, wobei die Klemmelemente ein plattenartiges, in die Ausnehmung einführbares Halteteil aufweisen.

Radzierblenden für KFZ-Radfelgen werden im allgemeinen kraftschlüssig an der Felge festgeklemmt, Dazu sind die Klemmelemente als metallische Halteklammern ausgebildet, die mit nach außen gerichteten Klemmzungen kraftschlüssig an der Innenschulter der Radfelge festgeklemmt werden (EP-A-01 87 228). Die Halteklammern besitzen Halteenden, die in zugeordnete schachtartige Ausnehmungen der Abdeckscheibe eingesetzt und darin mit Halteansätzen verklammert sind. Mit einem weiteren Halteansatz überfaßt jede Halteklammer unmittelbar einen metallischen Stützring, der dadurch auch an der Abdeckscheibe fixiert wird. Das alles erfordert einen verhältnismäßig komplizierten Aufbau der metallischen Halteklammern mit Abbiegungen für Klemmzungen und Halteklammern. Auch die Montage einer Radzierblende ist nicht ohne Probleme, weil die metallischen Halteklammern Ecken und Kanten besitzen, die die Felge zerkratzen und Anlaß zu Verletzungen sein können.

Aufgabe der Erfindung ist es, die Herstellung und die Montage von Radzierblenden der eingangs beschriebenen Gattung zu vereinfachen und Kratzer auf der Felge zu vermeiden.

Diese Aufgabe wird dadurch gelöst, daß die Klemmelemente aus Kunststoff bestehen sowie einen damit einstükkig verbundenen Klemmwulst zur Abstützung an der Innenschulter der Radfelge aufweisen, und daß sowohl im Bereich der Klemmwulste als auch im Bereich der Vorsprünge zum Zentrum der Abdeckscheibe hin offene Ausnehmungen zur gleichzeitigen Aufnahme des Stützrings vorgesehen sind. Bei dieser Radzierblende werden sowohl die Abdeckscheibe als auch die Klemmelemente aus Kunststoff hergestellt, und zwar vorzugsweise im Spritzgießverfahren, so daß eine Nachbearbeitung der Teile nicht mehr erforderlich ist. Lediglich der Stützring besteht noch aus Metall. Zur Montage der Radzierblende genügt es, bei horizontal liegender Radzierblende den Stützring in die dafür vorgesehenen offenen Ausnehmungen der Vorsprünge einzulegen und dann die Klemmelemente mit ihren Halteteilen in die dafür vorgesehenen schachtartigen Ausnehmungen der Vorsprünge einzuführen. Damit wird auch der Stützring fixiert und gleichzeitig eine entsprechende Vorspannung auf die Klemmelemente aufgebracht.

Um eine sichere Verriegelung der Klemmzungen in den schachtartigen Ausnehmungen der Abdeckscheibe zu gewährleisten, kann jedes plattenförmige Halteteil eine aus seiner Ebene herausragende, federnde Rastzunge und jede Ausnehmung eine zugeordnete Rastausnehmung aufweisen. Beim Einführen der Klemmelemente in die schachtartigen Ausnehmungen rasten die Federzungen automatisch in die zugeordneten Rastausnehmungen ein.

Um eine möglichst große Kontaktfläche zwischen dem Klemmwulst einerseits und der Innenschulter der Radfelge andererseits zu erreichen, sollte der Klemmwulst sich über die gesamte Breite des plattenförmigen Halteteils erstrecken. Es versteht sich, daß das Profil des Klemmwulstes weitgehend dem Profil der Innenschulter angepaßt ist.

Eine einfache Konstruktion, die sich auf Herstellung und Montage günstig auswirkt, ist dadurch gekennzeichnet, daß die den Stützring aufnehmende Ausnehmung im Bereich der Klemmwulste von der zum Zentrum der Abdeckscheibe gerichteten Seite des plattenförmigen Halteteils und einer an dem Klemmwulst anschließenden Randleiste begrenzt ist. Damit erhält das Klemmelement einen denkbar einfachen Querschnitt. Im Kombination dazu können die Vorsprünge beidseits ihrer schachtartigen Ausnehmungen vorstehende Konsolen mit radial innenliegenden Randausnehmungen aufweisen, wobei die Randausnehmungen sowohl zum Zentrum der Abdeckscheibe hin als auch zum freien Ende der Konsole hin offen sind. Die Konsolen dienen einerseits als Führung und Abstützung für das Klemmelement, insbesondere den Klemmwulst, sie halten aber auch den Stützring bei der Montage und später, wenn die Klemmelemente eingesetzt sind.

Es kann auch genügen, wenn der Klemmwulst aus zwei an den Längsrändern des plattenförmigen Halteteils angeordneten Klemmrippen besteht. Diese können auch federnd ausgebildet sein, wenn sie sich mit einem an der Innenschulter der Radfelge abstützenden Abschnitt freikragend über das Halteteil erstrecken. Zusätzlich kann zwischen den Klemmrippen wenigstens eine weitere Klemmrippe angeordnet sein. Auch die Randleiste kann von in den Ebenen der Klemmrippen angeordneten Randleistenabschnitten gebildet sein.

Im folgenden werden in der Zeichnung dargestellte Ausführungsbeispiele der Erfindung erläutert ; es zeigen :

Fig. 1 eine Innenansicht einer Radzierblende ohne Klemmelemente,

Fig. 2 einen Schnitt in Richtung II-II durch den Gegenstand nach Fig. 1,

Fig. 3 in perspektivischer Darstellung einen der innenseitigen Vorsprünge der Abdeckscheibe mit zugeordnetem Klemmwulst und Stützring

Fig. 4 eine andere Ausführung des Halteteils mit Klemmwulst, von der Unterseite gesehen,

Fig. 5 eine Seitenansicht des Gegenstandes nach Fig. 4,

Fig. 6 eine Stirnansicht des Gegenstandes nach Figur 4,

Fig. 7 eine Draufsicht auf den Gegenstand nach Fig. 4.

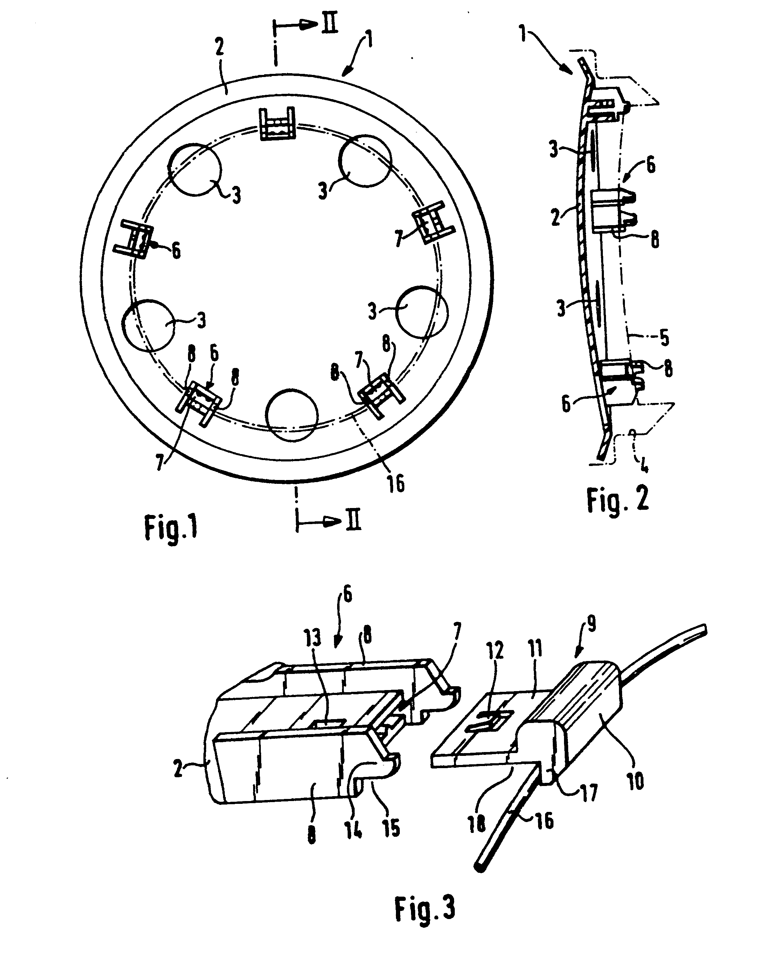

Die in der Zeichnung dargestellte Radzierblende 1 ist für KFZ-Radfelgen bestimmt. Sie besteht aus einer kreisförmigen, leicht gewölbten Abdeckscheibe 2 aus Kunststoff. Die Abdeckscheibe 2 kann zur Verzierung mehrere Durchbrüche 3 oder dergleichen aufweisen. Die Radzierblende 1 ist an der umlaufenden Innenschulter 4 einer strichpunktiert angedeuteten Radfelge 5 kraftschlüssig festklemmbar (Fig. 2). Im Randbereich der Abdeckscheibe 2 sind gleichmäßig über den Umfang verteilt mehrere Befestigungsvorsprünge 6 mit jeweils einem axial gerichteten, spaltförmigen Schacht 7 und beidseitigen Stützrippen 8 angeformt. In jeden Schacht 7 wird ein Klemmelement 9 eingesetzt, dessen freies, aus dem Schacht 7 herausragendes Ende einen Klemmwulst 10 bildet, der einstückig an das plattenförmige Halteteil 11 angeformt ist, welches in den Schacht 7 mit angepaßtem Querschnitt eingeschoben wird. Aus dem Halteteil 11 ist eine federnde Rastzunge 12 herausgebogen, die beim Einführen des Halteteils 11 einen Schacht 7 in eine zugeordnete Rastausnehmung 13 eingreift.

Die Stützleisten 8 beidseits des Schachtes 7 sind über die Öffnung des Schachtes 7 hinaus zu Konsolen 14 verlängert, die einerseits als Führung beim Einschieben des Klemmelementes 9 in den Schacht 7 und andererseits zur seitlichen Abstützung des Klemmwulstes 10 dienen, der die gleiche Breite besitzt wie das Halteteil 11.

Die Konsolen 14 besitzen auf ihrer zum Zentrum der Abdeckscheibe 2 hin gerichteten Seite Randausnehmungen 15, die sowohl zum Zentrum hin als auch zum freien Ende der Konsolen 14 hin offen sind. In diese Wandausnehmungen 15 wird ein metallischer Stützring 16 eingelegt, der beim Einschieben der Klemmelemente 9 von Randleisten 17 der Klemmwulste 10 gesichert wird. Jede Randleiste 17 ist an den zugeordneten Klemmwulsten 10 einstückig angeformt und begrenzt zusammen mit der zum Zentrum der Abdeckscheibe 7 gerichteten Seite 2 des plattenförmigen Halteteils 11 eine Ausnehmung 18, die mit den Randausnehmungen 15 des Befestigungsvorsprungs 6 zusammenwirkt.

Die Herstellung der Teile dieser Radzierblende ist einfach, denn die Abdeckscheibe 2 mit den angeformten Bauteilen und die Klemmelemente 9 können als Spritzgießteile hergestellt werden, die keiner Nachbearbeitung bedürfen. Auch die Montage ist einfach, weil es dazu genügt, die Abdeckscheibe 2 horizontal zu legen, den Stützring 16 in die Radausnehmungen 15 auszunehmen und dann die Klemmelemente 9 in die Schächte 7 so weit einzuschieben, bis sie darin verriegelt sind. Anschließend kann die Radzierblende gegen die Radfelge gesetzt werden, wobei die Klemmwülste 10, deren Profil dem Profil der Innenschulter 4 der Radfelge angepaßt sind, sich an der Innenschulter 4 abstützen. Dabei trägt der Stützring 16 wesentlich zur Vorspannung der Klemmwülste 10 in Richtung auf die Innenschulter 4 bei.

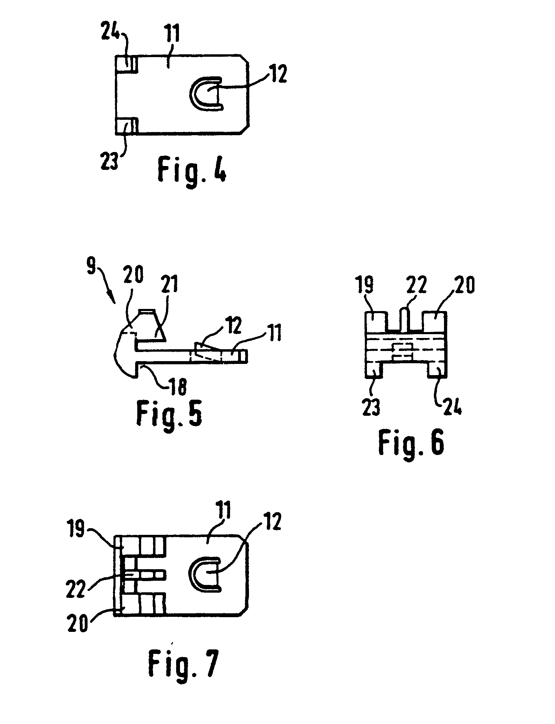

Bei der in den Figuren 4 bis 7 dargestellten Ausführung bezeichnen gleiche Bezugszeichen gleiche Teile. Das Klemmelement auf der Oberseite des plattenförmigen Halteteils 11 ist hier von zwei an den Längsrändern des Halteteils 11 angeordneten Klemmrippen 19, 20 gebildet, die sich mit einem Abschnitt 21, der sich an der Innenschulter 4 der Radfelge 5 abstützt, frei tragend über das Halteteil 11 erstreckt. Dementsprechend können die Klemmrippen 19, 20 etwas federn. Zwischen den beiden Klemmrippen 19, 20 ist eine weitere Klemmrippe 22 angeordnet. Die Randleiste an der Unterseite des Halteteils 11 wird von Randleistenabschnitten 23, 24 gebildet, die sich in den Ebenen der Klemmrippen 19, 20 erstrecken. Diese Randleistenabschnitte 23, 24 sind nasenförmig ausgebildet, damit sie die Ausnehmung 18 zur Aufnahme des Stützrings 16 definieren.

## Ansprüche

1. Radzierblende für eine KFZ-Radfelge mit umlaufender Innenschulter, bestehend aus einer kreisförmigen Abdeckscheibe (2), die innenseitig über den Umfang verteilt mehrere Vorsprünge (6) mit schachtartigen Ausnehmungen (7) aufweist, aus in den Ausnehmungen (7) gehaltenen Klemmelementen (9), die sich mit einem außerhalb der Ausnehmung (7) befindlichen Abschnitt an der Innenschulter der Radfelge abstützen, und aus einem metallischen Stützring (16), der an den Vorsprüngen (6) gehalten ist und die Klemmelemente (9) gegen die Innenschulter spannt, wobei die Klemmelemente (9) ein plattenartiges, in die Ausnehmung (7) einführbares Halteteil (11) aufweisen, dadurch gekennzeichnet, daß die Klemmelemente (9) aus Kunststoff bestehen, sowie einen damit einstückig verbundenen Klemmwulst (10) zur Abstützung an der Innenschulter der Radfelge aufweisen, und daß sowohl im Bereich der Klemmwülste (10) als auch im Bereich der Vorsprünge (6) zum Zentrum der Abdeckscheibe (2) hin offene Ausnehmungen (18 bzw. 15) zur gleichzeitigen Aufnahme des Stützrings (16) vorgesehen sind.

2. Radzierblende nach Anspruch 1, dadurch gekennzeichnet, daß das plattenförmige Halteteil (11) eine aus seiner Ebene herausragende, federnde Rastzunge (12) und jede Ausnehmung (7) eine zugeordnete Rastausnehmung (13) aufweist.

3. Radzierblende nach Anspruch 1 oder 2, dadurch gekennzeichnet, daß der Klemmwulst (10) sich über die gesamte Breite des plattenförmigen Halteteils (11) erstreckt.

4. Radzierblende nach einem der Ansprüche 1 bis 3, dadurch gekennzeichnet, daß die den Stützring (16) aufnehmende Ausnehmung (18) im Bereich der Klemmwulste (10) von der zum Zentrum der Abdeckscheibe (2) gerichteten Seite des plattenförmigen Halteteils (11) und einer an den Klemmwulst (10) anschließenden Randleiste (17) begrenzt ist.

5. Radzierblende nach einem der Ansprüche 1 bis 4, dadurch gekennzeichnet, daß die Vorsprünge (6) beidseits ihrer schachtartigen Ausnehmungen (7) vorstehende Konsolen (14) mit radial innenliegenden Randausnehmungen (15) aufweisen, wobei die Randausnehmungen (15) sowohl zum Zentrum der Abdeckscheibe (2) als auch zum freien Ende der Konsolen (14) hin offen sind.

6. Radzierblende nach Anspruch 1 oder 2, dadurch gekennzeichnet, daß das Klemmelement (9) aus zwei an den Längsrändern des plattenförmigen Halteteils (11) angeordneten Klemmrippen (19, 20) besteht.

7. Radzierblende nach Anspruch 6, dadurch gekennzeichnet, daß die Klemmrippen (19, 20) sich mit einem sich an der Innenschulter (4) der Radfelge (5) abstützenden Abschnitt (21) freikragend über das Halteteil (11) erstrecken.

8. Radzierblende nach Anspruch 6 oder 7, dadurch gekennzeichnet, daß zwischen den Klemmrippen (19, 20) wenigstens eine weitere Klemmrippe (22) angeordnet ist.

9. Radzierblende nach einem der Ansprüche 6 bis 8, dadurch gekennzeichnet, daß die Randleiste von in den Ebenen der Klemmrippen (19, 20) angeordneten Randleistenabschnitten (23, 24) gebildet ist.

## Claims

1. Decorative wheel trim for a motor vehicle wheel rim having a circumferential internal shoulder, comprising a circular cover disc (2), which is provided on its inner surface with a plurality of projection members (6) distributed over the circumference and having shaft-like recesses (7) formed therein, clamping elements (9) which are retained in the recesses (7) and are supported on the internal shoulder of the wheel rim by means of a portion situated externally of the recess (7), and a metallic supporting ring (16) which is retained on the projection members (6) and tightens the clamping elements (9) towards the internal shoulder, the clamping elements (9) having a plate-like retaining member (11), which is insertable into the recess (7), characterised in that the clamping elements (9) are formed from plastics arterial and have a clamping bead (10), which is integrally connected thereto, to provide support on the internal shoulder of the wheel rim, and in that recesses (18 and 15 respectively) are provided both in the region of the clamping beads (10) and in the region of the projection members (6), which recesses are open towards the centre of the cover disc (2) for the simultaneous accommodation of the supporting ring (16).

2. Decorative wheel trim according to claim 1, characterised in that the plate-like retaining member (11) has a resilient locking tongue (12), which protrudes from its plane, and each recess (7) has an associated locking recess (13).

3. Decorative wheel trim according to claim 1 or 2, characterised in that the clamping bead (10) extends over the entire width of the plate-like retaining member (11).

4. Decorative wheel trim according to one of claims 1 to 3, characterised in that the recess (18), which accommodates the supporting ring (16), is defined in the region of the clamping beads (10) by the side of the plate-like retaining member (11) directed towards the centre of the cover disc (2) and by an edge rail (17), which communicates with the clamping bead (10).

5. Decorative wheel trim according to one of claims 1 to 4, characterised in that the projection members (6) have brackets (14), which protrude at each end of their shaft-like recesses (7) and have radially extending, internally situated edge recesses (15), the edge recesses (15) being open both towards the centre of the cover disc (2) and towards the free end of the brackets (14).

6. Decorative wheel trim according to claim 1 or 2, characterised in that the clamping element (9) is formed from two clamping ribs (19, 20), which are disposed on the longitudinal edges of the plate-like retaining member (11).

7. Decorative wheel trim according to claim 6, characterised in that the clamping ribs (19, 20) extend in a freely protruding manner over the retaining member (11) with a portion (21) which is supported on the internal shoulder (4) of the wheel rim (5).

8. Decorative wheel trim according to claim 6 or 7, characterised in that at least one additional clamping rib (22) is disposed between the clamping ribs (19, 20).

9. Decorative wheel trim according to one of claims 6 to 8, characterised in that the edge rail is formed by edge rail portions (23, 24), which are disposed in the planes of the clamping ribs (19, 20).

## Revendications

1. Enjoliveur de roue pour une jante de roue de véhicule automobile à épaulement intérieur périphérique, se composant d'un disque de recouvrement circulaire (2) qui présente intérieurement plusieurs saillies (6) à évidements en puits (7), réparties sur la périphérie, d'éléments de serrage (9) maintenus dans les évidements (7), qui prennent appui, avec une section se trouvant à l'extérieur de l'évidement (7), sur l'épaulement intérieur de la jante de roue, et d'une bague d'appui métallique (16), maintenue sur les saillies (6) et qui serre les éléments de serrage (9) contre l'épaulement intérieur, les éléments de serrage (9) présentent une partie de maintien (11) planiforme susceptible d'être introduite dans l'évidement (7), caractérisé en ce que les éléments de serrage (9) se composent de matière plastique et présentent un bourrelet de serrage (10), ainsi relié d'une seule pièce à la partie de maintien (11), en vue de prendre appui sur l'épaulement intérieur de la jante de roue, et que, tant dans la zone des bourrelets de serrage (10) qu'également dans la zone des saillies (6), des évidements (18, respectivement 15) ouverts vers le centre du disque de recouvrement (2), sont prévus pour recevoir simultanément la bague d'appui (16).

2. Enjoliveur de roue selon la revendication 1, caractérisé en ce que la partie de maintien planiforme (11) présente une languette d'encliquetage élastique (12), faisant saillie de son plan, et que chaque évidement (7) présente un évidement d'encliquetage (13) associé.

3. Enjoliveur de roue selon la revendication 1 ou 2, caractérisé en ce que le bourrelet de serrage (10) s'étend sur toute la largeur de la partie de maintien planiforme (11).

4. Enjoliveur de roue selon l'une quelconque des revendications 1 à 3, caractérisé en ce que l'évidement (18) qui reçoit la bague de serrage (16) est limité dans la zone du bourrelet de serrage (10) par la face, tournée vers le centre du disque de recouvrement (2), de la partie de maintien planiforme (11) et par une bande de bordure (17) adjacente au bourrelet de serrage (10).

5. Enjoliveur de roue selon l'une quelconque des revendications 1 à 4, caractérisé en ce que, des deux côtés de leurs évidements (7) en forme de puits, les saillies (6) présentent des consoles proéminentes (14) avec des évidements de bordure (15), situés radialement à l'intérieur, qui sont ouverts, tant vers le centre du disque de recouvrement (2) qu'également vers l'extrémité libre des consoles (14).

6. Enjoliveur de roue selon la revendications 1 ou 2, caractérisé en ce que l'élément de serrage (9) se compose de deux nervures de serrage (19, 20) disposées sur les bordures longitudinales de la partie de maintien planiforme (11).

7. Enjoliveur de roue selon la revendication 6, caractérisé en ce que les nervures de serrage (19, 20) s'étendent en faisant saillie librement au-dessus de la partie de maintien (11), avec une section (21) prenant appui sur l'épaulement intérieur (4) de la jante de roue (5).

8. Enjoliveur de roue selon la revendication 6 ou 7, caractérisé en ce qu'au moins une nervure de serrage supplémentaire (22) est disposée entre les nervures de serrage (19, 20).

9. Enjoliveur de roue selon l'une quelconque des revendications 6 à 8, caractérisé en ce que la bande de bordure est formée par des sections de bande de bordure (23, 24) disposées dans le plan des nervures de serrage (19, 20).

Fig.1

Fig. 2

Fig.3

**Fig. 4**

**Fig. 5**

**Fig. 6**

**Fig. 7**